# EUROPÄISCHE PATENTANMELDUNG

(11) **EP 2 886 220 A1**
(43) Veröffentlichungstag der Anmeldung: **24.06.2015**
(21) Anmeldenummer: 13197741.5
(22) Anmeldetag: 17.12.2013
(51) Int. Cl.: B21D 43/10, B21D 43/18, B21D 43/28, B23K 37/04, B23K 26/08, B25J 15/06

(54) **Verfahren zum Handhaben von plattenförmigem Schneidgut an einer Schneidmaschine**

(71) Anmelder: MN Coil Servicecenter GmbH, 23730 Neustadt (DE)
(72) Erfinder: Bechert, Anja, 20148 Hamburg (DE); Leutemann, Dennis, 23758 Wangels (DE)
(74) Vertreter: Patentanwälte Vollmann & Hemmer

(57) **Zusammenfassung**

Das Verfahren ist zum Handhaben von plattenförmigem Schneidgut (8) an einer Schneidmaschine (1) vorgesehen, bei dem ein plattenförmiges Schneidgut (8) der Schneidmaschine (1) zugeführt wird, welches in der Schneidmaschine (1) in mindestens ein Gutteil (12) und mindestens ein Restteil (13) zerschnitten wird, von dem das mindestens eine Gutteil (12) mittels eines Handhabungsautomaten (3) von der Schneidmaschine (1) auf eine Gutteilablage (16) transportiert wird und das mindestens eine Restteil (13) einer Entsorgung (15) zugeführt wird. Das mindestens eine Gutteil (12) und das mindestens eine Restteil (13) werden mittels des Handhabungsautomaten (3) gleichzeitig von der Schneidmaschine (1) entfernt, wonach das mindestens eine Gutteil (12) vom Handhabungsautomaten (3) auf der Gutteilablage (16) abgelegt wird und das mindestens eine Restteil (13) vom Handhabungsautomaten (3) einem Auffangbehälter (15) oder einer Weitertransporteinrichtung zugeführt wird.

## Beschreibung

Die Erfindung betrifft ein Verfahren zum Handhaben von plattenförmigem Schneidgut an einer Schneidmaschine mit den im Oberbegriff des Anspruchs 1 angegebenen Merkmalen.

Bei plattenförmigem Schneidgut im Sinne der vorliegenden Erfindung handelt es sich typischerweise um Feinblechabschnitte, die beispielsweise von einem Coil abgelängt und nachfolgend gerichtet worden sind, denen dann eine konturierte Form, beispielsweise als Zuschnitt für einen Kotflügel oder ein anderes noch zu verformendes Bauteil vorgesehen sind. Insbesondere bei kleineren Stückzahlen ist es häufig günstiger, die Konturierung des Blechabschnitts in einer Schneidmaschine vorzunehmen, in welcher die Schnittführung in einer Spur individuell vorgegeben werden kann, damit die sonst sehr aufwändigen Werkzeuge für ein Ausstanzen eines solchen Blechteils eingespart werden können. Als Schneidmaschine wird hierzu beispielsweise eine Portalmaschine eingesetzt, bei welcher das auf einem Werkzeugtisch liegende Schneidgut durch einen oder mehrere am Portal geführte Schneidköpfe bearbeitet wird. Dabei kann zum Schneiden beispielsweise ein Laserstrahl eingesetzt werden, welcher die Schnittkontur abfährt, d. h. die Schneidfuge ausbrennt, oder aber ein Fräser, der die Schneidfuge spanend entfernt. Der Laser- oder Fräserkopf ist quer verfahrbar am Portal der Maschine angeordnet, welches selbst längsverfahrbar ist, so dass jeder Punkt des Werkzeugtisches erreicht werden kann.

Es zählt zum praktizierten Stand der Technik, das plattenförmige Schneidgut mit einem Handhabungsautomaten entweder von einem Schneidgutstapel neben der Maschine oder kontinuierlich vom Band kommend aufzunehmen und in eine vorbestimmte Stellung auf dem Maschinentisch zu verbringen. Dann erfolgt der eigentliche Schneidvorgang, bei welchem aus dem plattenförmigen Schneidgut, z. B. einer rechteckigen Tafel, ein oder mehrere konturierte Bauteile ausgeschnitten werden. Dabei entstehen ein oder mehrere Gutteile sowie typischerweise ein, je nach Schnittführung ggf. auch mehrere Restteile, die einer Entsorgung zuzuführen sind. Die Gutteile sind entweder direkt zur weiteren Verarbeitung oder zur Zwischenlagerung zu führen.

Es zählt zum Stand der Technik nach erfolgtem Schneidvorgang von Hand oder mittels eines Handhabungsautomaten die Gut- und Restteile nacheinander vom Maschinentisch zu entfernen und der weiteren Bearbeitung bzw. Entsorgung zuzuführen.

Nachteilig bei dem praktizierten Handhabungsverfahren ist es, dass die Handhabungsvorgänge nacheinander ablaufen müssen und dadurch zum einen der gesamte Bearbeitungsvorgang zeitintensiv ist und zum anderen die Schneidmaschine während dieser Handhabungszeiten nicht genutzt werden kann.

Vor diesem Hintergrund liegt der Erfindung die Aufgabe zugrunde, ein gattungsgemäßes Verfahren zum Handhaben von plattenförmigem Schneidgut an einer Schneidmaschine zu verbessern, um das Verfahren schneller und damit effizienter zu gestalten.

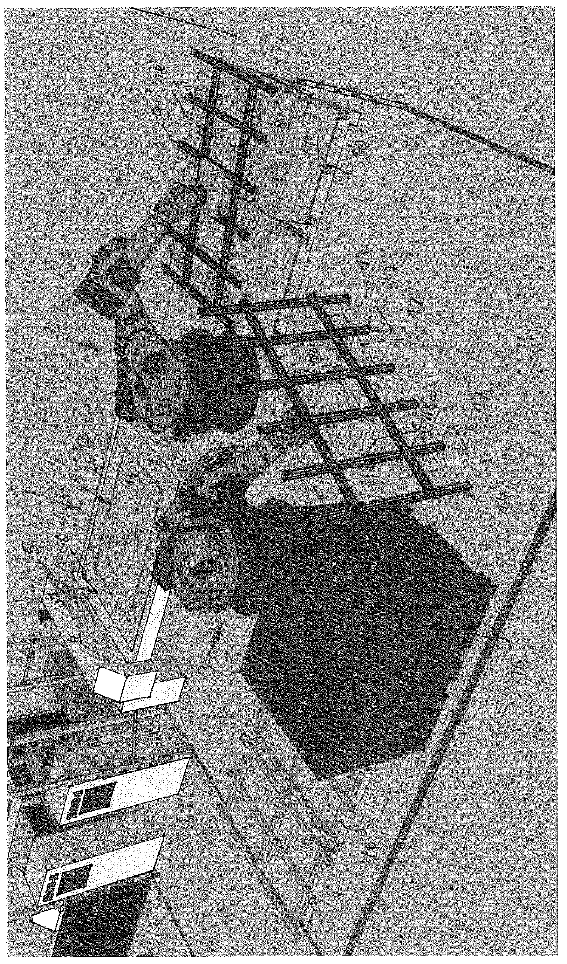

Diese Aufgabe wird gemäß der Erfindung durch ein Verfahren mit den in Anspruch 1 angegebenen Merkmalen gelöst. Vorteilhafte Ausgestaltungen des erfindungsgemäßen Verfahrens ergeben sich aus den Unteransprüchen, der nachfolgenden Beschreibung und der Zeichnung. Hierbei können die in den Unteransprüchen und der Beschreibung angegebenen Merkmale jeweils für sich, aber auch in geeigneter Kombination die erfindungsgemäße Lösung gemäß Anspruch 1 sowie auch gemäß Anspruch 13, der einen Handhabungsautomaten zur Durchführung des erfindungsgemäßen Verfahrens betrifft, weiter ausgestalten.

Das erfindungsgemäße Verfahren ist dadurch gekennzeichnet, dass das mindestens eine Gut- und das mindestens eine Restteil mittels des Handhabungsautomaten gleichzeitig von der Schneidmaschine entfernt werden, wonach das mindestens eine Gutteil von dem Handhabungsautomaten auf der Gutteilablage abgelegt wird und das mindestens eine Restteil vom Handhabungsautomaten einem Auffangbehälter oder einer Weitertransporteinrichtung zugeführt wird. Es versteht sich, dass gemäß der Erfindung dann, wenn zwei oder mehr Gutteile bzw. zwei oder mehr Restteile beim Schneidvorgang entstehen, diese gleichzeitig vom Handhabungsautomaten aufgenommen und der weiteren Verarbeitung zugeführt werden. Dabei ist unter Gutteilablage im Sinne der Erfindung typischerweise eine Stapelablage, wie beispielsweise eine Palette, zu verstehen, auf welcher die Gutteile gestapelt werden, dies kann jedoch auch ein Transportband oder eine andere geeignete Ablage sein, welche zur Weiterverarbeitung des Gutteils dient oder dieses der Weiterverarbeitung zuführt. Das oder die Restteil(e) werden entweder einem Auffangbehälter oder einer Weitertransportvorrichtung zugeführt, die diese dann der Entsorgung zuführt. Entsorgung im Sinne der Erfindung kann auch eine anderweitige Verwendung bedeuten.

Grundgedanke des erfindungsgemäßen Verfahrens ist es, nach dem Schneidvorgang die verbleibenden Teile, nämlich das oder die Gutteil(e) und das oder die Restteil(e), gleichzeitig mittels des Handhabungsautomaten zu entfernen, um auf diese Weise das Verfahren zu beschleunigen und insbesondere auch die Stillstandszeiten der Schneidmaschine zu verringern. Bei geeigneter Ausgestaltung und Steuerung des Handhabungsautomaten kann dabei auf eine Zwischenablage der Bauteile verzichtet werden, wenn diese in geeigneter Weise möglichst direkt der weiteren Verarbeitung zugeführt werden. Mit einer Zwischenablage, auf welcher Gut- und Restteile zwischengelagert werden können, verlängert sich zwar insgesamt die Handhabungszeit, kann aber die Stillstandszeit der Schneidmaschine verringert werden.

Vorteilhaft werden dabei das mindestens eine Gutteil und das mindestens eine Restteil mittels des Handhabungsautomaten gemeinsam von der Schneidmaschine entfernt und nachfolgend auf der Gutteilablage abgelegt bzw. dem Auffangbehälter oder der Weitertransporteinrichtung zugeführt. Durch die gemeinsame Handhabung ergibt sich der Vorteil, dass hierfür nur ein Handhabungsautomat erforderlich ist, wodurch die Verfahrenskosten reduziert werden.

Gemäß einer vorteilhaften Weiterbildung der Erfindung wird zumindest das mindestens eine Gutteil vor dem Ablegen in eine Prüfstellung verbracht, in welcher eine vorzugsweise optische Oberflächenprüfung erfolgen kann. Eine solche Prüfstellung ist beispielsweise eine etwa senkrechte Stellung, in welcher das Gutteil vorzugsweise gleichmäßig beleuchtet wird und so eine optische Kontrolle einer Seite, beispielsweise durch Sichtkontrolle, erfolgen kann. Dabei genügt es in der Regel, eine der beiden Seiten einer solchen optischen Oberflächenprüfung zuzuführen, da häufig nur diese eine Seite im fertigen Produkt sichtbar bleibt. Dabei kann die optische Kontrolle nach dem Ablegen des Restteils oder auch davor, d. h. wenn Restteil und Gutteil noch gemeinsam gehandhabt werden, erfolgen.

Vorteilhaft wird das plattenförmige Schneidgut auf einem Maschinentisch der Schneidmaschine abgelegt. Wenn es sich um eine Schneidmaschine handelt, die berührungsfrei, beispielsweise mittels Laser, arbeitet, genügt in der Regel die Auflage des Schneidgutes durch Eigengewicht. Bei spanender Bearbeitung hingegen muss ein Aufspannen des Schneidgutes auf den Schneidtisch erfolgen.

Um die Stillstandszeiten der Schneidmaschine weiter zu verringern, ist es vorteilhaft, mindestens zwei Handhabungsautomaten einzusetzen, nämlich einen Handhabungsautomaten für das Zuführen zum und Ablegen auf den Maschinentisch sowie mindestens einen weiteren Handhabungsautomaten zum Entfernen von Gut- und Restteilen vom Maschinentisch sowie nachfolgendem Ablegen bzw. Zuführen. Beim Handhaben von plattenförmigem Schneidgut, insbesondere von vergleichsweise dünnen Blechtafeln, wird vorteilhaft ein Handhabungsautomat mit einem Werkzeugträger verwendet, der mittels Vakuumspanntechnik arbeitet. Derartige Werkzeugträger sind kostengünstig aufbaubar und umrüstbar, d. h. an unterschiedliche Werkstückformen anpassbar. Die Vakuumspanntechnik hat darüber hinaus den Vorteil, dass das Werkstück, hier also insbesondere das oder die Gutstücke, nur einseitig mit dem Werkzeugträger in Verbindung kommen, so dass auf der anderen Seite zum einen eine vollständige optische Kontrolle des Werkstücks erfolgen kann und zum anderen eine Beeinträchtigung der Oberfläche durch den Handhabungsautomaten zumindest auf dieser Seite zuverlässig ausgeschlossen werden kann.

Die Verwendung eines Handhabungsautomaten, dessen Werkzeugträger mittels Vakuumspanntechnik arbeitet, ist insbesondere für das erfindungsgemäße Verfahren von Vorteil, wenn nämlich mit einem Handhabungsautomat sowohl das Gutteil bzw. die Gutteile, als auch das Restteil bzw. die Restteile gleichzeitig und gemeinsam gehandhabt werden, wie dies beim Aufnehmen vom Schneidtisch erfolgt. Bei dieser Vakuumspanntechnik können mit geringem technischen Aufwand zwei oder mehr getrennte Vakuumkreise vorgesehen sein, wobei jedem Vakuumkreis ein oder mehrere Saugnäpfe zugeordnet werden und die Zuordnung so erfolgt, dass ein Vakuumkreis zum Ansaugen aller Gutteile und der andere Vakuumkreis zum Ansaugen aller Restteile vorgesehen ist, die aus einem Schneidgut geschnitten worden sind. Dadurch, dass zwei getrennt steuerbare Vakuumkreise vorgesehen sind, können zwar die Gut- und Restteile gleichzeitig und gemeinsam vom Maschinentisch aufgenommen werden, es können jedoch andererseits die Teile gesondert losgelassen werden. So kann beispielsweise der Handhabungsautomat mit seinem Werkstückträger über einen Auffangbehälter verfahren werden, wonach der die Restteile haltende Vakuumkreis abgeschaltet wird und die Restteile in diesen Behälter fallen, wohingegen das oder die Gutteile sicher am Werkstückträger verbleiben. Umgekehrt kann, je nach Reihenfolge des Verfahrens, auch ein Gutteil oder alle Gutteile durch Deaktivieren des entsprechenden diese haltenden Vakuumkreises abgelegt werden, ohne das oder die Restteile loszulassen.

Besonders vorteilhaft ist es, wenn zunächst das mindestens eine Restteil oder alle Restteile durch Abschalten des entsprechenden Vakuumkreises, typischerweise durch Gravitationskraft, vom Werkstückträger entfernt werden, wonach dann der Handhabungsautomat mit dem am Werkstückträger noch befindlichem Gutteil bzw. Gutteilen zum Ablegen desselben verfahren wird.

Um sicherzustellen, dass auch die Oberfläche an der Rückseite des Gutteils, also dort, wo das Gutteil am Werkstückträger gehalten wird, frei von Partikeln ist, was insbesondere bei der Stapelablage wichtig ist, da ein solcher Partikel auf der Vorderseite des darüber abgelegten Gutteils zu finden wäre, ist gemäß einer Weiterbildung des erfindungsgemäßen Verfahrens vorgesehen, dass die Oberfläche des oder der bereits abgelegten Gutteile vorzugsweise mittels Luftstrom von Partikeln gereinigt wird. Es wird also vorteilhaft immer die Oberseite des Ablagestapels durch Luftstrom von Partikeln freigeblasen, bevor das neue Gutteil darauf abgelegt wird. Dies kann ggf. auch durch eine mechanische Wisch- oder Kehrbehandlung erfolgen. Dabei kann die Reinigung vorteilhaft durch den Handhabungsautomaten selbst erfolgen, beispielsweise mittels einer Druckluft führenden Düse im Bereich des Werkstückträgers, vorzugsweise mit mehreren Düsen, um einen gleichmäßigen, über die gesamte Breite des Gutteils verlaufenden Luftstrom zu erzeugen. Eine solche Reinigung kann durch den Handhabungsautomaten in der Zeit erfolgen, in welcher das nächste Werkstück bereits durch die Schneidmaschine bearbeitet wird, so dass hierdurch keine zusätzlichen Stillstandzeiten bedingt sind.

Das erfindungsgemäße Verfahren wird bevorzugt zum Handhaben von Feinblechen, insbesondere Aluminium- oder anderen Leichtmetallblechen mit einer Dicke zwischen 0,5 und 3 mm eingesetzt, d. h. für Bleche, die typischerweise einer nachfolgenden formgebenden Bearbeitung unterworfen werden. Das Verfahren wird besonders vorteilhaft in Verbindung mit einer Schneidmaschine eingesetzt, die als Fräsmaschine ausgebildet ist. Hier wird vorzugsweise eine Portalfräsmaschine mit einem oder mehreren Fräsköpfen eingesetzt, wobei der Maschinentisch vorteilhaft als Lufttisch ausgebildet ist, auf welchem das Schneidgut ebenfalls mittels Vakuumspanntechnik fixiert wird. Das erfindungsgemäße Verfahren eignet sich in besonderer Weise im Zusammenhang mit der vorerwähnten Fräsmaschine, da eine hohe Oberflächenqualität des oder der Gutteile gewährleistet werden kann, und zwar nicht nur hinsichtlich der Oberfläche sondern auch hinsichtlich der Schnittkanten. Die Verwendung der Vakuumspanntechnik sowohl maschinentischseitig als auch handhabungsautomatseitig bringt maschinenmäßig Synergien mit sich und ist zudem kostengünstig und einfach in der Anwendung.

Zur Durchführung des erfindungsgemäßen Verfahrens ist insbesondere ein Handhabungsautomat von Vorteil, der einen Werkstückträger aufweist, der zwei oder mehr von einem Vakuumkreis beaufschlagte Saugnäpfe aufweist, wobei der Werkstückträger nicht wie üblich einen sondern zwei Vakuumkreise aufweist, denen jeweils unterschiedliche Saugnäpfe zugeordnet sind und deren Beaufschlagung getrennt steuerbar ist. Auf diese Weise können mit nur einem Handhabungsautomaten die Gut- und Restteile gleichzeitig vom Maschinentisch aufgenommen werden, jedoch diese gesteuert an unterschiedlicher Stelle nacheinander abgelegt werden, ohne eine Zwischenhandhabung zu erfordern.

Die Erfindung ist nachfolgend anhand eines in der Zeichnung dargestellten Ausführungsbeispiels näher erläutert. Die Figur zeigt eine Anlage zum Handhaben und Schneiden von plattenförmigem Schneidgut in stark vereinfachter perspektivischer Darstellung.

Die dargestellte Anlage zur Ausführung des erfindungsgemäßen Verfahrens weist eine Schneidmaschine 1 auf, einen daneben angeordneten ersten Handhabungsautomaten 2 und einen ebenfalls neben der Schneidmaschine 1 angeordneten zweiten Handhabungsautomaten 3. Bei der Schneidmaschine 1 handelt es sich um eine Portalschneidmaschine mit einem an einem Portal 4 quer verfahrbaren Fräskopf 5 mit einem am unteren Ende wechselbar angeordneten, rotierbaren Fräser 6. Das Portal 4 selbst ist längs eines Maschinentisches 7 verfahrbar, der zur Aufnahme eines Werkstücks 8, hier einer rechteckigen Aluminiumplatte 8, vorgesehen ist. Der Maschinentisch 7 weist eine Vielzahl von Bohrungen auf, die an eine zentrale Vakuumpumpe angeschlossen sind, so dass ein darauf abgelegtes Werkstück 8 mittels Vakuumspanntechnik fixierbar ist.

Zur Handhabung eines Werkstücks 8 dient der erste Handhabungsautomat 2, der ebenso wie der zweite Handhabungsautomat 3 ein 6-Achsen-Roboter ist. Der neben der Schneidmaschine 1 angeordnete erste Handhabungsautomat 2, der an seinem freien Ende mit einem Werkstückträger 9 versehen ist, der eine gitterartige Struktur aufweist und einseitig mit Saugnäpfen 18 versehen ist, die über in der Zeichnung nicht dargestellte Leitungsverbindungen mit einer Vakuumpumpe verbunden sind und zum Aufnehmen des Werkstücks 8 am Werkstückträger 9 vorgesehen sind. In der in der Figur dargestellten Stellung weisen die Saugnäpfe 18 nach unten, um Werkstücke 8 in Form von rechteckigen Platten von einem auf einer Palette 10 angeordneten Plattenstapel 11 aufzunehmen.

Der Handhabungsautomat 2 fährt also mit seinen Saugnäpfen 18 nach unten gerichtet über den Plattenstapel 11, aktiviert nach dem Aufsetzen die Vakuumpumpe, wodurch die oberste Platte des Plattenstapels 11 an den Werkstückträger 9 angesaugt wird. Das Werkstück 8 wird sodann mittels des ersten Handhabungsautomaten 2 zum Maschinentisch 7 befördert und dort an einer vorbestimmten Position abgelegt, indem die Vakuumbeaufschlagung abgeschaltet wird. Der erste Handhabungsautomat 2 fährt sodann wieder über den Plattenstapel 11 zur Aufnahme eines neuen Werkstücks 8. Gleichzeitig wird der Maschinentisch 7 vakuumbeaufschlagt, wodurch das Werkstück 8 auf dem Maschinentisch 7 gespannt wird. Danach wird der Fräskopf 5 mit dem Fräser 6 aktiviert, abgesenkt und mittels des Portals 4 so über dem Maschinentisch 7 verfahren, dass der Fräser 6 eine vorbestimmte Kontur aus dem Werkstück 8 herausfräst, so dass ein Gutteil 12 und ein Restteil 13 verbleiben, die vollständig voneinander getrennt, aber in der ursprünglichen Position auf dem Maschinentisch 7 liegen.

Um das weiterzuverarbeitende Gutteil 12 und das davon körperlich getrennte, aber dieses umgebende Restteil 13 vom Maschinentisch 7 zu entfernen und diese Teile der weiteren Verarbeitung bzw. Bearbeitung zuzuführen, ist der zweite Handhabungsautomat 3 vorgesehen, bei dem es sich ebenfalls um einen 6-Achsen-Industrieroboter handelt und an dessen freien Ende ein Werkstückträger 14 vorgesehen ist, der in ähnlicher Weise wie der Werkstückträger 9 aufgebaut ist. Auch der zweite Handhabungsautomat 3 ist mit einer Vakuumpumpe versehen, welche jedoch zwei Vakuumkreise speist, von denen einer mit Saugnäpfen 18a leitungsverbunden ist, die im Bereich des Restteils 13 zur Anlage kommen, wohingegen der andere mit Saugnäpfen 18b verbunden ist, die im Bereich des Gutteils 12 zur Anlage kommen, wenn der Werkstückträger 14 über dem Maschinentisch 7 auf das fertig geschnittene Werkstück 8 abgesenkt wird. Nach dem Absenken werden beide Vakuumkreise mit den zugehörigen Saugnäpfen 18a und 18b leitungsverbunden, so dass sowohl das Gutteil 12 als auch das Restteil 13 angesaugt und fest mit dem Werkstückträger 14 verbunden werden. Nach Abschaltung des maschinentischseitigen Vakuums werden das Gutteil 12 und das dieses umgebende Restteil 13 vom Handhabungsautomaten 3 zunächst in die in der Figur dargestellte Stellung verbracht, in welcher die Oberfläche einer Seite, insbesondere des Gutteils 12, einer optischen Sichtkontrolle unterzogen werden kann.

Sobald die Sichtkontrolle abgeschlossen ist, wird der Werkstückträger 14 über einen neben dem zweiten Handhabungsautomaten 3 angeordneten Container 15 verfahren, wonach der Vakuumkreis, welcher die Saugnäpfe 18a speist, die das Restteil 13 halten, unterbrochen wird. Das Restteil 13 fällt sodann schwerkraftbedingt in den Container 15. Der zweite Handhabungsautomat 3 verfährt dann mit seinem Werkstückträger 14, dem Gutteil 12 und den am Werkstückträger 14 angebrachten Druckluftdüsen 17 einmal die Oberfläche des zuvor abgelegten Gutteils 12 ab, um diese von Partikeln zu befreien, die auf der Oberfläche befindlich sind. Der Werkstückträger 14 mit dem daran noch befindlichen Gutteil 12 wird dann über eine Palette 16 verfahren, welche als Stapelablage der Gutteile 12 dient. Wenn das Gutteil 12 auf die Ablage 16 bzw. das dort bereits liegende Gutteil abgesenkt worden ist, wird der andere Vakuumkreis unterbrochen, so dass die Verbindung zwischen Werkzeugträger und Gutteil 12 gelöst wird. Sodann steht der zweite Handhabungsautomat 3 wieder zur Verfügung, um ein weiteres geschnittenes Werkstück 8 vom Maschinentisch 7 aufzunehmen, das zwischenzeitlich mittels des ersten Handhabungsautomaten 2 dort abgelegt und mittels des Fräsers 6 bearbeitet worden ist.

Die vorstehend beschriebene Ausführungsvariante mit zwei Handhabungsautomaten 2 und 3 ermöglicht eine besonders gute zeitliche Koordination und Ausnutzung der Maschinen 1, 2 und 3. Es versteht sich, dass die Beschickung des Maschinentisches 7 auch mit nur einem Handhabungsautomaten erfolgen kann, wodurch sich allerdings die Taktzeit verringert, da nicht wie bei der vorstehend beschriebenen Ausführungsform parallel ein Werkstück dem Maschinentisch 7 zugeführt und ein anderes abgeführt und abgelegt werden kann.

### Bezugszeichenliste

- 1: - Schneidmaschine
- 2: - erster Handhabungsautomat
- 3: - zweiter Handhabungsautomat
- 4: - Portal
- 5: - Fräskopf
- 6: - Fräser
- 7: - Maschinentisch
- 8: - Werkstück
- 9: - Werkstückträger vom ersten Handhabungsautomaten
- 10: - Palette
- 11: - Plattenstapel
- 12: - Gutteil
- 13: - Restteil
- 14: - Werkstückträger vom zweiten Handhabungsautomaten
- 15: - Container
- 16: - Palette
- 17: - Druckluftdüsen
- 18: - Saugnäpfe
- 18a: - Saugnäpfe für Restteil
- 18b: - Saugnäpfe für Gutteil

## Patentansprüche

1. Verfahren zum Handhaben von plattenförmigem Schneidgut (8) an einer Schneidmaschine (1), bei dem ein plattenförmiges Schneidgut (8) der Schneidmaschine (1) zugeführt wird, welches in der Schneidmaschine (1) in mindestens ein Gutteil (12) und mindestens ein Restteil (13) zerschnitten wird, von dem das mindestens eine Gutteil (12) mittels eines Handhabungsautomaten (3) von der Schneidmaschine (1) auf eine Gutteilablage (16) transportiert wird und das mindestens eine Restteil (13) einer Entsorgung (15) zugeführt wird, **dadurch gekennzeichnet, dass** das mindestens eine Gutteil (12) und das mindestens eine Restteil (13) mittels des Handhabungsautomaten (3) gleichzeitig von der Schneidmaschine (1) entfernt werden, wonach das mindestens eine Gutteil (12) vom Handhabungsautomaten (3) auf der Gutteilablage (16) abgelegt wird und das mindestens eine Restteil (13) vom Handhabungsautomaten (3) einem Auffangbehälter (15) oder einer Weitertransporteinrichtung zugeführt wird.

2. Verfahren nach Anspruch 1, **dadurch gekennzeichnet, dass** das mindestens eine Gutteil (12) und das mindestens eine Restteil (13) mittels des Handhabungsautomaten (3) gemeinsam von der Schneidmaschine (1) entfernt und nacheinander abgelegt / zugeführt werden.

3. Verfahren nach Anspruch 1 oder 2, **dadurch gekennzeichnet, dass** zumindest das mindestens eine Gutteil (12) vor dem Ablegen in eine Prüfstellung verbracht wird, in welcher eine vorzugsweise optische Oberflächenprüfung erfolgen kann.

4. Verfahren nach einem der vorhergehenden Ansprüche, **dadurch gekennzeichnet, dass** das plattenförmige Schneidgut (8) auf einem Maschinentisch (7) der Schneidmaschine (1) abgelegt wird.

5. Verfahren nach einem der vorhergehenden Ansprüche, **dadurch gekennzeichnet, dass** das Zuführen zum und Ablegen auf dem Maschinentisch (7) vorzugsweise mittels eines weiteren Handhabungsautomaten (2) erfolgt.

6. Verfahren nach einem der vorhergehenden Ansprüche, **dadurch gekennzeichnet, dass** ein Handhabungsautomat (2, 3) mit einem Werkstückträger (9, 14) verwendet wird, welcher mittels Vakuumspanntechnik arbeitet.

7. Verfahren nach einem der vorhergehenden Ansprüche, **dadurch gekennzeichnet, dass** der Handhabungsautomat (3), mit welchem das mindestens eine Gutteil (12) und das mindestens eine Restteil (13) gehandhabt wird, mit mindestens zwei getrennten Vakuumkreisen arbeitet, wobei jedem Vakuumkreis ein oder mehrere Saugnäpfe (18a, 18b) zugeordnet werden, und wobei ein Vakuumkreis zum Ansaugen aller Gutteile (12) und der andere Vakuumkreis zum Ansaugen aller Restteile (13) vorgesehen ist, die aus einem Schneidgut (8) geschnitten worden sind.

8. Verfahren nach einem der vorhergehenden Ansprüche, **dadurch gekennzeichnet, dass** erst das mindestens eine Restteil (13) und dann das mindestens eine Gutteil (12) abgelegt wird.

9. Verfahren nach einem der vorhergehenden Ansprüche, **dadurch gekennzeichnet, dass** nach Ablegen des mindestens einen Gutteils (12) die Oberfläche des mindestens einen Gutteils (12) vorzugsweise durch Luftstrom von Partikeln gereinigt wird.

10. Verfahren nach einem der vorhergehenden Ansprüche, **dadurch gekennzeichnet, dass** die Reinigung mittels Luftstroms durch mindestens eine druckluftführende Düse (17) am Handhabungsautomaten (3) durch diesen erfolgt.

11. Verfahren nach einem der vorhergehenden Ansprüche, **dadurch gekennzeichnet, dass** das Schneidgut (8) durch Aluminiumbleche einer Dicke zwischen 0,5 und 3 mm gebildet wird.

12. Verfahren nach einem der vorhergehenden Ansprüche, **dadurch gekennzeichnet, dass** als Schneidmaschine (1) eine Fräsmaschine, vorzugsweise eine Portalfräsmaschine, mit einem Lufttisch (7) eingesetzt wird, auf welchem das Schneidgut (8) mittels Vakuumspanntechnik fixiert wird.

13. Handhabungsautomat zur Durchführung des Verfahrens nach einem der vorhergehenden Ansprüche, mit einem Werkstückträger (14), der zwei oder mehr von einem Vakuumkreis beaufschlagbare Saugnäpfe (18) aufweist, **dadurch gekennzeichnet, dass** der Werkstückträger (14) von zwei Vakuumkreisen beaufschlagbar ist, wobei den Vakuumkreisen unterschiedliche Saugnäpfe (18a, 18b) zugeordnet sind und die Beaufschlagung der Vakuumkreise getrennt steuerbar ist.
